# EUROPEAN PATENT APPLICATION

(11) **EP 3 020 547 A1**
(43) Date of publication of application: **18.05.2016**
(21) Application number: 14822740.8
(22) Date of filing: 10.07.2014
(51) Int. Cl.: B32B 27/00, B32B 25/08, B32B 27/16, B32B 27/30, C08F 290/06, C08J 7/04, C09D 11/30

(54) **LAMINATE BODY AND ACTIVE-ENERGY-RAY-CURABLE INK COMPOSITION USING SAME**

(30) Priority: 12.07.2013 JP 2013146720
(71) Applicant: DNP Fine Chemicals Co., Ltd., Yokohama-shi, Kanagawa 226-0022 (JP)
(72) Inventor: SAITO, Yasuma, Yokohama-shi Kanagawa 226-0022 (JP); MORIYAMA, Gaku, Yokohama-shi Kanagawa 226-0022 (JP); FURUTAKA, Toshio, Yokohama-shi Kanagawa 226-0022 (JP)
(74) Representative: Winter, Brandl, Fürniss, Hübner, Röss, Kaiser, Polte - Partnerschaft mbB
(86) International application number: PCT/JP2014/068501
(87) International publication number: WO 2015/005453

(57) **Abstract**

Provided is a laminate body having a decorative layer formed on the surface thereof, having excellent cracking resistance and external appearance retention even in an environment such as one in which the base material undergoes repeated expansion and contraction. A laminate body on which a decorative layer, which is a cured film made from an active-energy-ray-curable ink composition, is formed on a stretchable base material, wherein the cured film contains a cured product comprising: a monofunctional monomer (monomer (A)) having a glass transition point at or below -30°C; and an alkylene-oxide-modified tri-or higher-functional monomer (monomer (B)) in which the number of alkylene oxide modifications/number of functional groups, which is the ratio of the number of alkylene oxide modifications and the number of functional groups, is 3 or greater, the number of cracks in a test piece of the cured film after prescribed repeated tensile testing being 3 or less.

## Description

### TECHNICAL FIELD

The present invention relates to a laminate body having a decorative layer provided on a surface of a stretchable base material and an active-energy-ray-curable ink composition used therefor.

### BACKGROUND ART

Hitherto, the development of an active-energy-ray-curable ink composition cured by ultraviolet rays, electron beams, and other active energy rays has been performed. The active-energy-ray-curable ink composition is rapidly dryable. Therefore, even when printing or decorating is performed on a base material which does not, or almost does not, absorb ink, such as plastic, glass, or coated paper, bleeding of ink can be prevented. The active-energy-ray-curable ink composition includes a polymerizable monomer, a polymerization initiator, a pigment, other additives, and the like.

In recent years, it has been required to form a decorative layer, such as printing or a design, on a base material to obtain a laminate body, not only when the base material is plastic, glass, coated paper, or the like, but also when the base material is a flexible material, such as a polyethylene terephthalate resin, a vinyl chloride resin, or rubber. In this case, the laminate body is required to have an elongation of 100% or more without causing cracking or peeling, even if the laminate body is stretched, and to possess durability at that elongation.

As an example of the active-energy-ray-curable ink composition to configure the decorative layer, a composition including (A) 20% to 65% by mass inclusive among reaction components of an acrylate monomer which gives a homopolymer having a glass transition point of 0°C or less, (B) a monofunctional acrylate having an alicyclic structure, and (C) a polyfunctional acrylate having an alicyclic structure has been proposed (see Patent Document 1).

The laminate body obtained by printing or decorating this ink composition on a polyethylene terephthalate resin or a vinyl chloride resin has excellent flexibility, elongation durability, scratch resistance, and weather resistance. The laminate body has durability in elongation even if the laminate body is stretched and affixed to articles having curved surfaces, such as vehicle bodies. Therefore, the laminate body does not cause cracking or peeling.

Patent Literature 2 described below discloses an inkjet composition suitable for applications requiring stretchability of a printed film after being cured, such as a marking film.

Patent Document 1: Japanese Unexamined Patent Application, Publication No. 2011-162703
Patent Document 2: Pamphlet of PCT International Publication No. WO2009/139455

### DISCLOSURE OF THE INVENTION

### Problems to be Solved by the Invention

A decorative layer is stuck to an expandable base material, such as a vinyl chloride resin, while being expanded. Therefore, the decorative layer requires cracking resistance at the time of expansion. However, when the decorative layer is formed on an expandable and contractive base material, such as rubber, the decorative layer requires not only cracking resistance at the time of expansion but also properties at the time of contraction. Specifically, as the properties required at the time of contraction, it is required that an external appearance is maintained without wrinkles when the decorative layer returns to an original shape thereof at the time of contraction after being expanded at the time of expansion (external appearance retention). After the above-described expansion and contraction are further repeated, use conditions become severe, and therefore cracking resistance and external appearance retention (hereinafter, these are also referred collectively to as durability) are required at higher levels. Here, expansion mainly means elongation, and contraction mainly means contraction after expansion.

In this point, in a conventional laminate body in which the decorative layer described in Patent Literature 1 or 2 is formed on an expandable base material, such as a vinyl chloride resin, required properties, such as cracking resistance at the time of expansion, are taken into account, but required properties, such as durability at the time of repeated expansion and contraction, are not taken into account. Therefore, even when such a decorative layer as described in Patent Literature 1 or 2 is formed on an expandable and contractive base material, such as rubber, sufficient external appearance retention or durability is not obtained.

The present invention has been achieved in view of the above-described circumstances. An object thereof is to provide a laminate body having excellent durability in an environment in which expansion and contraction are repeated, and an active-energy-ray-curable ink composition used therefor. Means for Solving the Problems

Specifically, the present invention provides the following.
(1) The present invention provides a laminate body in which a decorative layer which is a cured film of an active-energy-ray-curable ink composition is formed on a stretchable base material, in which
   the cured film contains cured products of the following monomer A) and monomer B),
   the monomer A) is a monofunctional monomer having a glass transition point at or below -30°C,
   the monomer B) is an alkylene-oxide-modified tri- or higher-functional monomer in which the number of alkylene oxide modifications/number of functional groups, which is a ratio of the number of alkylene oxide modifications and the number of functional groups, is three or more, and
   the number of cracks in a test piece of the cured film after the following repeated tensile testing is three or less. Repeated tensile testing: An active-energy-ray-curable ink composition is formed as a cured film having a thickness of 40 µm on an ethylene propylene rubber base material having a thickness of 1.5 mm. The cured film-formed base material having this cured film formed thereon is used as a test piece of width 3 mm X length 80 mm to perform tensile testing at - 20°C and at a tensile rate of 500 mm/min to a length of 130% of the original length. Thereafter, the length is returned to the original length. This is repeated 100 times, and then the number of cracks in all the test pieces is measured visually.
(2) The present invention provides the laminate body according to (1), in which the ratio of the number of alkylene oxide modifications/number of functional groups is five or more.
(3) The present invention provides the laminate body according to (1) or (2), in which the ratio of number of alkylene oxide modifications/number of functional groups is six or more.
(4) The present invention provides the laminate body according to any one of (1) to (3), including 1% to 80% by mass inclusive of the monomer B) relative to a total amount of active-energy-ray-polymerizable monomers.
(5) The present invention provides the laminate body according to (1), in which the number of cracks is three or less even when the repetition number of the repeated tensile testing is 300.
(6) The present invention provides an active-energy-ray-curable ink composition including as an active-energy-ray-polymerizable monomer,
   a monomer A) which is a monofunctional monomer having a glass transition point at or below -30°C, and
   a monomer B) which is an alkylene-oxide-modified tri- or higher-functional monomer in which the number of alkylene oxide modifications/number of functional groups, which is the ratio of the number of alkylene oxide modifications and the number of functional groups, is three or more.
(7) The present invention provides the active-energy-ray-curable ink composition according to (6), in which the ratio of number of alkylene oxide modifications/number of functional groups is six or more.
(8) The present invention provides the active-energy-ray-curable ink composition according to (6) or (7), in which the ratio of number of alkylene oxide modifications/number of functional groups is eight or more.
(9) The present invention provides the active-energy-ray-curable ink composition according to any one of (6) to (8), including 1-80% by mass inclusive of the monomer B) relative to the total amount of the active-energy-ray-polymerizable monomers.
(10) The present invention provides the active-energy-ray-curable ink composition according to any one of (6) to (9), used as an inkjet ink.

### Effects of the Invention

The present invention can provide a laminate body having cracking resistance and external appearance retention improved in an environment in which expansion and contraction are repeated, and an active-energy-ray-curable ink composition used therefor.

### BRIEF DESCRIPTION OF THE DRAWINGS

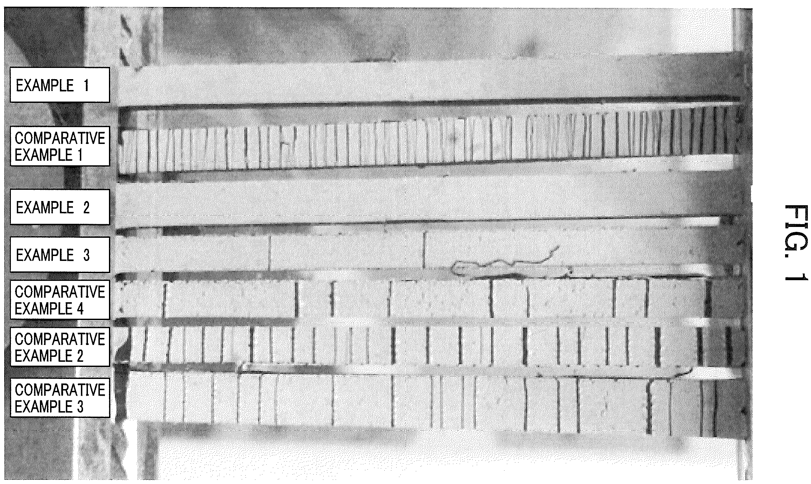

FIG. 1 illustrates a test piece after repeated tensile testing in Examples.

### PREFERRED MODE FOR CARRYING OUT THE INVENTION

Hereinafter, specific embodiments of the present invention will be described in detail. However, the present invention is not limited in any way to the following embodiments, and can be performed by applying appropriate modifications within the intended scope of the present invention.

### Laminate body

In a laminate body of the present invention, a decorative layer which is a cured film of an ink composition is formed on a surface of a base material, and the decorative layer is formed on a part or the whole of the surface of the base material. A surface protection layer may be formed on the decorative layer. A primer layer may be formed between the surface of the base material and the decorative layer.

### Base material

The base material in the present invention may be a conventionally known base material. An expandable base material, a contractive base material, or an expandable and contractive base material (hereinafter, also referred to as stretchable base material) can be used without any particular limitation. Among the above-described base materials, a base material having so-called elasticity may be used. Examples thereof include an elastomer base material and a base material having a static shearing elastic modulus of 0.001MPa to 30MPa inclusive. Conventionally known natural rubber or synthetic rubber may be used.

The elastomer base material includes a thermoplastic elastomer (hereinafter, also referred to as "TPE"). TPE is a polymer material which is plasticized and can be subjected to injection molding or processing like plastics at a high temperature, and exhibits properties of a rubber elastomer at a normal temperature.

A TPE molecule may be a block polymer type in which a hard segment (plastic component) and a soft segment (elastic component) are chemically bonded to each other in a single polymer, or a blend type in which the hard segment and the soft segment are physically blended. Examples of the TPE molecule include a styrene-based molecule, an olefin-based molecule, and a polyurethane-based molecule.

Examples of the styrene-based molecule include SBS (styrene-butadiene-styrene block copolymer), SEBS (styrene-ethylene-butylene-styrene block copolymer), and SEPS (styrene-ethylene-propylene-styrene block copolymer). Examples of the olefin-based molecule include TPO (thermoplastic olefin) in which ethylene-propylene rubber is finely dispersed in polypropylene. Examples of the polyurethane-based molecule include thermoplastic polyurethane (hereinafter, also referred to as "TPU").

The present invention is characterized in that cracking resistance and external appearance retention can be maintained even in an environment in which such a base material as described above undergoes repeated expansion and contraction.

### Decorative layer

The decorative layer may be printed by any method, such as an inkjet method, a spray method, or a brush coating method. However, the inkjet method is preferable in view of enhancing a degree of freedom of decorating.

The ink composition to configure the decorative layer may impart decorativeness by including a coloring material, may impart gloss without including a coloring material, or may impart a mat effect by including a matting agent. However, an active-energy-ray-curable ink composition including a coloring material is preferable. By using the active-energy-ray-curable ink composition, the following effects are obtained, for example. (i) When printing is performed on a base material, appropriate coating on the base material can be performed due to low surface tension of the ink composition. (ii) When printing is performed on the base material, time for drying the ink composition can be reduced due to the active-energy-ray-curable ink composition. (iii) The reduction in drying time can prevent a plurality of kinds of ink compositions having different colors from being mixed on the base material to form a clear image even on a surface of a nonabsorbing base material. (iv) When printing is performed on the base material, the ink composition does not swell the base material.

### [Active-energy-ray-curable ink composition]

### [Coloring material]

A dye type coloring material or a pigment type coloring material can be used as the coloring material. However, the pigment type coloring material is preferably used. The pigment may be any inorganic pigment or organic pigment usually used in a conventional oily ink composition. Examples thereof include carbon black, cadmium red, molybdenum red, chrome yellow, cadmium yellow, titanium yellow, titanium oxide, chromium oxide, viridian, Titanium Cobalt Green, Ultramarine Blue, Prussian Blue, Cobalt Blue, diketopyrrolopyrrole, anthraquinone, benzimidazolone, anthrapyrimidine, azo-based pigments, phthalocyanine-based pigments, quinacridone-based pigments, isoindolinone-based pigments, dioxazine-based pigments, threne-based pigments, perylene-based pigments, perinone-based pigments, thioindigo-based pigments, quinophthalone-based pigments, metal complex pigments, aluminum paste, silica, calcium carbonate, magnesium carbonate, clay, precipitated barium sulfate, and pearl pigment.

As the matting agent, a conventionally known matting agent can be used. Examples thereof include an inorganic matting agent formed of particles, such as silica, spherical silica, alumina, kaolinite, calcium carbonate, barium sulfate, or glass, and an organic matting agent, such as a polycarbonate resin, an acrylic resin, a polyamide (nylon) resin, a urea resin, or a silicon-based resin.

A preferable dispersed particle size of the pigment of the active-energy-ray-curable ink composition is preferably 10nm to 300nm inclusive as a volume average particle size according to a laser scattering method. The particle size of 10 nm or more is preferable because light resistance is improved. On the other hand, the particle size of 300 nm or less is preferable because dispersion is stably and satisfactorily maintained, and head clogging or ejection bending is less likely to occur when an inkjet ink is ejected by an inkjet recording apparatus.

In the present invention, when a pigment is used, the content thereof may be appropriately adjusted. The content may depend on the kind of the pigment, but from the viewpoint of achieving a balance between dispersibility and coloring power, the content of the pigment in the total amount of the ink composition is preferably from 0.1 to 20% by mass inclusive, and more preferably from 0.2 to 10% by mass inclusive, in the case of an organic pigment. From the viewpoint of achieving a balance between dispersibility and coloring power, the content is preferably from 1 to 40% by mass inclusive, and more preferably from 5 to 20% by mass inclusive, in the case of an inorganic pigment.

### [Viscosity]

The viscosity of the active-energy-ray-curable ink composition is preferably from 5mPa·s to 30mPa·s inclusive, and more preferably from 5mPa·s to 20 mPa·s inclusive, at 40°C. The viscosity of 5mPa·s or more is preferable because when the ink composition is ejected using an inkjet apparatus, ejectability is excellent. Excellent ejectability means that dot omission of the ink hardly occurs during continuous printing and disturbance in ejection or the like hardly occurs, and therefore normal printing can be easily performed. The viscosity of 30 mPa·s or less is preferable because even when a mechanism of decreasing the viscosity by heating is not incorporated in the head of the inkjet apparatus, ejection failure caused by dot omission hardly occurs, and a possibility that the ink composition is not ejected normally becomes lower.

The surface tension of the active-energy-ray-curable ink composition of the present invention at 40°C is preferably from 20mN/m to 40mN/m inclusive from the viewpoint of inkjet ejectability and ejection stability.

### [Composition]

In order to maintain cracking resistance and external appearance retention even in an environment in which the base material undergoes repeated expansion and contraction, the active-energy-ray-curable ink composition includes an active-energy-ray-polymerizable monomer and an active-energy-ray-polymerization initiator, if necessary. The active-energy-ray-polymerizable monomer includes the following monomer A) and monomer B).
Monomer A): monofunctional monomer having a glass transition point at or below -30°C
Monomer B): alkylene-oxide-modified tri- or higher-functional monomer in which the number of alkylene oxide modifications/number of functional groups, which is the ratio of the number of alkylene oxide modifications and the number of functional groups, is three or more

Here, the term "active-energy-ray-polymerizable monomer" refers to a polymerizable monomer having one or more ethylenically unsaturated double bonds.

### [Monomer A): monofunctional monomer having a glass transition point of -30°C or less)]

The active-energy-ray-polymerizable monofunctional monomer includes a monomer A): active-energy-ray-polymerizable monofunctional monomer which has an ethylenically unsaturated double bond and gives a homopolymer having a glass transition point (Tg) of -30°C or less (hereinafter, also referred to as "monomer A)"). The monomer A) can increase flexibility and stretchability of a cured film. High Flexibility means that when a printed material on which a cured film of an ink composition is formed is bent, the cured film is not easily broken. High stretchability means that when the cured film is stretched, the cured film is not easily broken.

Examples of the monomer A) include 2-ethylhexyl acrylate (Tg = -85°C), 2-ethylhexylcarbitol acrylate (Tg = -65°C), 2-methoxyethyl acrylate (Tg = -50°C), 2-methoxybutyl acrylate (Tg = -56°C), 4-hydroxybutyl acrylate (Tg = -80°C), diethylene glycol monoethyl ether acrylate (Tg = -70°C), ethoxydiethylene glycol acrylate (Tg = -70°C), isoamyl acrylate (Tg = -45°C), isodecyl acrylate (Tg = -55°C), isooctyl acrylate (Tg = -83°C), isotetradecyl acrylate (Tg = -56°C), caprolactone acrylate (Tg = -53°C), methoxytripropylene glycol acrylate (Tg = -75°C), EO (ethylene oxide)-modified succinic acid acrylate (Tg = -40°C), and tridecyl acrylate (Tg = -75°C). Among them, the monomer A) is preferably any one or more monomers selected from isooctyl acrylate, tridecyl acrylate, and ethoxydiethylene glycol acrylate from the viewpoint of excellent flexibility and adhesion and small curing shrinkage.

The content of the monomer A) is preferably from 2 to 65% by mass inclusive, more preferably from 5 to 50% by mass inclusive, and still more preferably from 10 to 35% by mass inclusive, relative to the total amount of the active-energy-ray-polymerizable monomers. The content of 2% by mass or more is preferable from the viewpoint that when a laminate body on which a cured film is formed is bent or stretched, the cured film of an ink composition easily follows elongation of the base material and hardly causes cracks or peeling. The content of 65% by mass or less is preferable from the viewpoint that when the ink composition is irradiated with a predetermined amount of active energy rays, curing of the ink composition may proceed sufficiently.

### [Monomer B): tri- or higher-functional monomer in which the number of alkylene oxide modifications/number of functional groups is three or more]

The monomer B) in the present invention is an alkylene-oxide-modified tri- or higher-functional monomer which has an ethylenically unsaturated double bond and in which the number of alkylene oxide modifications/number of functional groups, which is the ratio of the number of alkylene oxide modifications and the number of functional groups, is three or more, preferably five or more, more preferably six or more, and particularly preferably eight or more.

The present invention is characterized in that it has been found that not only cracking resistance at the time of expansion but also external appearance retention at the time of contraction is excellent by using a tri- or higher-functional monomer in which the number of alkylene oxide modifications/number of functional groups is three or more. By increasing the number of alkylene oxide modifications in one molecule, the alkylene oxide chain can be longer and a distance between crosslinking points can be increased. This makes it possible to secure flexibility of the cured film. Meanwhile, by using a tri- or higher-functional monomer, the number of the crosslinking points itself is increased, and the strength of the cured film can be thereby maintained. By using a monomer in which the number of alkylene oxide modifications/number of functional groups is three or more as a balance between these two, it is possible to obtain a cured film having not only followability at the time of expansion but also followability at the time of contraction particularly at a low temperature. The followability at the time of expansion and at the time of contraction can be evaluated by repeated tensile testing described below in Examples.

The number of alkylene oxide modifications is the number of alkylene oxide modifications in one molecule of a polyfunctional monomer, and specifically the total number n of -R-O- (R: alkylene group) in one molecule of the polyfunctional monomer. Examples of the alkylene oxide modification include ethylene oxide modification (ethoxylation) and propylene oxide modification (propoxylation). The number of modifications is 10 or more, preferably 20 or more, and particularly preferably 30 or more. The number of functional groups is three or more, and preferably four or more. More preferably, the number of modifications is 20 or more and the number of functional groups is three or more, the number of modifications is 30 or more and the number of functional groups is three or more, or the number of modifications is 30 or more and the number of functional groups is four or more.

Examples of the trifunctional monomer include monomers containing various modified products, such as an ethylene oxide-modified (EO-modified) product of a (meth) acrylate, such as isocyanuric acid triacrylate, tri (2-hydroxyethyl isocyanurate) triacrylate, hydroxypivalic acid trimethylolpropane triacrylate, phosphoric acid triacrylate, propionic acid dipentaerythritol triacrylate, sorbitol triacrylate, tetramethylol propane triacrylate, tetramethylol ethane triacrylate, tetramethylolmethane triacrylate, trimethylolpropane triacrylate, pentaerythritol triacrylate, or glyceryl triacrylate, a propylene oxide-modified (PO-modified) product thereof, or a butylene oxide-modified product thereof. The monomer structure may contain just one kind or a plurality of kinds of the various modifications.

Examples of the tetrafunctional monomer include monomers containing various modified products, such as an ethylene oxide-modified (EO-modified) product of a (meth) acrylate, such as ditrimethylolpropane tetraacrylate, tetramethylolmethane tetraacrylate, pentaditrimethylolpropane tetraacrylate, pentaerythritol tetraacrylate, dipentaerythritol tetraacrylate, sorbitol tetraacrylate, or propionic acid dipentaerythritol tetraacrylate, a propylene oxide-modified (PO-modified) product thereof, or a butylene oxide-modified product thereof. The monomer structure may contain just one kind or a plurality of kinds of the various modifications.

Examples of the pentafunctional monomer include monomers containing various modified products, such as an ethylene oxide-modified (EO-modified) product of a (meth) acrylate, such as dipentaerythritol hydroxy pentaacrylate, sorbitol pentaacrylate, or dipentaerythritol pentaacrylate, a propylene oxide-modified (PO-modified) product thereof, or a butylene oxide-modified product thereof. The monomer structure may contain just one kind or a plurality of kinds of the various modifications.

Examples of the hexafunctional monomer include monomers containing various modified products, such as an ethylene oxide-modified (EO-modified) product of a (meth) acrylate, such as dipentaerythritol hexaacrylate or sorbitol hexaacrylate, a propylene oxide-modified (PO-modified) product thereof, or a butylene oxide-modified product thereof. The monomer structure may contain just one kind or a plurality of kinds of the various modifications.

Among these monomers, examples of the monomer B) in the present invention, which is a tri- or higher-functional monomer in which the number of alkylene oxide modifications/number of functional groups is three or more, include EO-modified (9) glycerin acrylate, EO-modified (20) glycerin acrylate, EO-modified (9) trimethylolpropane triacrylate, EO-modified (15) trimethylolpropane triacrylate, EO-modified (35) pentaerythritol tetraacrylate, EO-modified (18) dipentaerythritol hexaacrylate, EO-modified (24) dipentaerythritol hexaacrylate, and EO-modified (48) dipentaerythritol hexaacrylate. Here, the numerical value in parentheses is the number of modifications.

The upper limit of the content of the monomer B) is not particularly limited, but is preferably from 1 to 80% by mass inclusive, more preferably from 2 to 60% by mass inclusive, still more preferably from 2 to 40% by mass inclusive, and most preferably from 3 to 20% by mass inclusive, relative to the total amount of the active-energy-ray-polymerizable monomers. The content of 1% by mass or more is preferable due to excellent durability, that is, excellent cracking resistance and external appearance retention when expansion and contraction are repeated at a low temperature. The content of 80% by mass or less is preferable because the viscosity of the ink is reduced and an ejection property during printing is therefore improved.

### [Other monomers]

In the present invention, other monomers or the like, such as a bifunctional monomer or a tri- or higher functional monomer other than the monomer B), having the number of modifications/number of functional groups = less than three, may be included, to the extent that the object of the present invention can be achieved. Examples of acrylates included as other monomers include polyurethane (meth)acrylate, polyester (meth)acrylate, and polyether (meth)acrylate. An active-energy-ray-curable ink composition containing a monomer having a relatively high viscosity like these acrylates may have a high viscosity as a whole ink. Therefore, for example, when the ink is ejected using an inkjet apparatus, ejection may be difficult according to an ejection pressure. Therefore, when these acrylates are included, the content thereof is preferably 10% by mass or less, and more preferably 5% by mass or less, relative to the total amount of the monomers. It is still more preferable if there is no substantial acrylate content. Containing no other monomers substantially means that the content of the other monomers is 1% by mass or less relative to the total amount of the monomers. Here, the monomer in the present invention is a concept including a compound also referred to as an oligomer or a prepolymer according to a molecular weight thereof.

Examples of the bifunctional monomer included as other monomers include a bifunctional monomer having the number of modifications/number of functional groups (2) = three or more, that is, having the number of modifications of six or more. Specific examples thereof include a (meth) acrylate such as polyalkylene glycol diacrylate, bisphenol A diacrylate, neopentyl glycol diacrylate, or neopentyl glycol hydroxypivalic acid ester diacrylate, and modified products thereof or the like having the number of modifications of six or more. More specific examples thereof include EO-modified (6) polyethylene glycol # 300 diacrylate, EO-modified (9) polyethylene glycol # 400 diacrylate, EO-modified (14) polyethylene glycol # 600 diacrylate, EO-modified (23) polyethylene glycol # 1000 diacrylate, EO-modified (46) polyethylene glycol # 2000 diacrylate, PO-modified (7) polypropylene glycol # 400 diacrylate, PO-modified (12) polypropylene glycol # 700 diacrylate, BO (butylene oxide)-modified (9) poly tetramethylene glycol # 650 diacrylate, EO-modified (10) bisphenol A diacrylate, EO-modified (17) bisphenol A diacrylate, EO-modified (30) bisphenol A diacrylate, PO-modified (12) bisphenol A diacrylate, PO-modified (8) neopentyl glycol diacrylate, and PO-modified (16) neopentyl glycol diacrylate.

In the active-energy-ray-curable ink composition of the present invention, the total amount of the monomer A, the monomer B, and the other monomers is preferably 80% by mass or more, more preferably 90% by mass or more, and still more preferably 100% by mass substantially, relative to the total amount of the monomers. Here, 100% by mass substantially means that the total amount of the monomer A, the monomer B, and the other monomers is 99% by mass or more relative to the total amount of the monomers.

Examples of the tri- or higher functional monomer other than the monomer B), having the number of modifications/number of functional groups = less than three, included as the other monomers, include glyceryl triacrylate, PO-modified (3) glyceryl triacrylate, PO-modified (5.5) glyceryl triacrylate, trimethylolpropane triacrylate, EO-modified (3) trimethylolpropane triacrylate, EO-modified (6) trimethylolpropane triacrylate, PO-modified (3) trimethylolpropane triacrylate, PO-modified (6) trimethylolpropane triacrylate, pentaerythritol triacrylate, pentaerythritol tetraacrylate, EO-modified (4) pentaerythritol tetraacrylate, ditrimethylolpropane tetraacrylate, dipentaerythritol pentaacrylate, and dipentaerythritol hexaacrylate.

A monofunctional monomer having an alicyclic structure, which gives a homopolymer having a glass transition point of 0°C or more and 110°C or less, may be included as the other monomers. Specific examples thereof include isobornyl acrylate (Tg = 94°C), 4-t-butylcyclohexyl acrylate (Tg = 34°C), cyclohexyl acrylate (Tg = 15°C), and dicyclopentenyloxy ethyl acrylate (Tg = 14°C). Among these monomers, one or more monomers selected from isobornyl acrylate, 4-t-butylcyclohexyl acrylate, cyclohexyl acrylate, and dicyclopentenyloxyethyl acrylate are preferable, in view of improving the balance between flexibility and film strength. It is preferable to include the monofunctional monomer having an alicyclic structure and having a glass transition point of 0°C or more and 110°C or less, from a viewpoint of improving damage resistance. However, it is preferable not to include the monofunctional monomer from a viewpoint of improving followability with respect to an expandable and contractive base material at a low temperature.

Another monomer may be further added appropriately as the other monomers to the extent that the object of the present invention can be achieved. Examples thereof include a monofunctional monomer, such as benzyl acrylate (Tg = 6°C), phenoxyethyl acrylate (Tg = -22°C), lauryl acrylate (Tg = - 3°C), 2-hydroxyethyl acrylate (Tg = -15°C), stearyl acrylate (Tg = 30°C), dicyclopentenyl acrylate (Tg = 120°C), dicyclopentanyl acrylate (Tg = 120°C), or 1-adamantyl acrylate (Tg = 153°C).

Above all, by further including a phenoxy(poly)alkylene glycol (meth)acrylate optionally containing a substituent in a benzene ring, adhesion, particularly adhesion to a surface protection layer described below, can be enhanced. By including a phenoxy(poly)alkylene glycol (meth)acrylate having a glass transition point preferably of 0°C or less, more preferably of -20°C or less, followability with respect to expansion and contraction of a base material can be improved while adhesion to the surface protection layer is enhanced. Details of the action of enhancing the adhesion by including the phenoxy(poly)alkylene glycol (meth)acrylate are not clear. However, it is estimated that the adhesion is enhanced because hydrophilicity of a decorative layer is improved due to a (poly)alkylene glycol chain by including phenoxy(poly)alkylene glycol (meth)acrylate, and consequently affinity with a hydrophilic group (hydroxy group or the like) of a surface protection layer is improved.

Specific examples of the phenoxy(poly)alkylene glycol (meth)acrylate optionally containing a substituent in a benzene ring include the above-described phenoxyethyl (meth)acrylate, phenoxydietylene glycol (meth)acrylate, phenoxytetraetylene glycol (meth)acrylate, phenoxyhexaetylene glycol (meth)acrylate, and compounds containing a substituent in a benzene ring thereof.

The content of the phenoxy(poly)alkylene glycol (meth)acrylate optionally containing a substituent in a benzene ring is preferably 5% by mass or more, more preferably 10% by mass or more, particularly preferably 20% by mass or more, and preferably 70% by mass or less as an upper limit, in the total amount of the active-energy-ray-polymerization monomers. The content of 5% by mass or more makes adhesion to the surface protection layer excellent. The content of 70% by mass or less provides sufficient polymerizability by the active energy rays.

The total content of the other monomers is preferably from 10 to 80% by mass inclusive, and more preferably from 10 to 70% by mass inclusive, relative to a total amount of the active-energy-ray-polymerizable monomers.

### [Active-energy-ray-polymerization initiator]

The active-energy-ray-curable ink composition may contain an active-energy-ray-polymerization initiator, if necessary. The active energy rays may be any light rays such as farultraviolet rays, ultraviolet rays, near-ultraviolet rays, and infrared rays; electromagnetic waves such as X-rays and γ-rays; an electron beam, a proton beam, a neutron beam, or the like, as long as the active energy rays are energy rays which can trigger polymerization reaction of a radical, a cation, an anion, or the like. However, curing by irradiation with ultraviolet rays is preferable from the viewpoints of a rate of curing, easy availability of an irradiation apparatus, the price, and the like. The active-energy-ray-polymerization initiator is not particularly limited as long as the initiator accelerates polymerization reaction of a compound having an ethylenically unsaturated double bond in an active-energy-ray-curable ink composition by irradiation with the active energy rays. A conventionally known active-energy-ray-polymerization initiator can be used. Specific examples of the active-energy-ray-polymerization initiator include aromatic ketones, such as thioxanthone; α-aminoalkylphenones; α-hydroxyketones; acylphosphine oxides; aromatic onium salts; organic peroxides; thio compounds; hexaarylbiimidazole compounds; keto oxime ester compounds; borate compounds; azinium compounds; metallocene compounds, active ester compounds, compounds having carbon-halogen bonds; and alkylamine compounds.

In the present invention, it is preferable to use, among these compounds, one or more selected from the group consisting of acylphosphine oxides, α-hydroxyketones, and α-aminoalkylphenones as the active-energy-ray-polymerization initiator from the viewpoint of accelerating polymerization reaction and increasing curability.

Specific examples of the acylphosphine oxides include bis(2,4,6-trimethylbenzoyl)-phenyl-phosphine oxide bis(2,6-dimethoxybenzoyl)-2,4,4-trimethyl-pentylphenylphoshpine oxide and (2,4,6-trimethoxybenzoyl)phosphine oxide.

Specific examples of α-hydroxyketone include 2-hydroxy-1-{4-[4-(2-hydroxy-2-methyl-propionyl)-benzyl]-phenyl}-2-methyl-propan-1-one, 2-hydroxy-4'-hydroxyethoxy-2-methylpropiophenone, 1-hydroxy-cyclohexyl-phenyl-ketone, and oligo{2-hydroxy-2-methyl-1-[4-(1-methylvinyl)phenyl]propanone}.

Specific examples of α-aminoalkylphenone include 2-benzyl-2-dimethylamino-1-(4-morpholinophenyl-butanone-1,2-dimethylamino-2-[(4-methylphenyl)methyl]-1-[4-(4-morpholinyl)phenyl]-1-butanone.

The amount of the active-energy-ray-polymerization initiator is only required to be an amount capable of appropriately initiating polymerization reaction of an active energy-ray-polymerizable monomer, and is preferably from 1 to 20% by mass inclusive, and more preferably from 3 to 20% by mass inclusive, relative to the total amount of the active-energy-ray-curable ink composition.

### [Dispersant]

The active-energy-ray-curable ink composition preferably contains a dispersant for dispersing the coloring material. Examples of the dispersant include a polymeric dispersant. The main chain of this polymeric dispersant is formed of a polyester-based chain, a polyacrylate-based chain, a polyurethane-based chain, a polyamine-based chain, a polycaprolactone-based chain, or the like. The polymeric dispersant preferably includes a polar group such as an amino group, a carboxyl group, a sulfone group, or a hydroxyl group, or a salt thereof as a side chain.

Preferable examples of the polymeric dispersant include polyester-based dispersants. Specific examples thereof include "SOLSPERSE 33000", "SOLSPERSE 32000", and "SOLSPERSE 24000" manufactured by Lubrizol Japan, Ltd.; "Disperbyk 168" manufactured by BYK Chemie GmbH; and "AJISPER PB821" manufactured by Ajinomoto Fine-Techno Co., Inc.

The content ratio of the polymeric dispersant, as an active ingredient, is preferably from 3 to 100 parts by mass inclusive, and more preferably from 5 to 60 parts by mass inclusive, relative to 100 parts by mass of the coloring material. The content ratio of 3 parts by mass or more is preferable because the polymeric dispersant can disperse the coloring material uniformly, and stability or ejectability of the ink is not reduced. The stability of the ink means stability of the ink properties (for example, viscosity or particle size) obtainable when the ink composition is stored for a long time. The content ratio of 100 parts by mass or less is preferable because curable components, such as polymerizable monomers, relatively increase, curability can be maintained, and flexibility of a cured product is not reduced.

The content of the polymeric dispersant is preferably, as an active ingredient, from 0.1 to 30% by mass inclusive, and more preferably from 0.5 to 20% by mass inclusive, relative to the total amount of the ink composition. The content of 0.1% by mass or more is preferable because the polymeric dispersant can disperse the coloring material uniformly, and stability or ejectability of the ink is not reduced. The content of 30% by mass or less is preferable because curable components, such as polymerizable monomers, increase relatively, curability can be maintained, and flexibility of a cured product is not reduced.

### [Surface adjusting agent]

The active-energy-ray-curable ink composition may further include a surface adjusting agent. The surface adjusting agent is not particularly limited. However, specific examples thereof include "BYK-306", "BYK-333", "BYK-371", and "BYK-377" manufactured by BYK Chemie GmbH, which have dimethylpolysiloxane; "TegoRad 2100", "TegoRad 2200N" and "TegoRad 2300" manufactured by Evonik Degussa Japan Co., Ltd.

The content of the surface adjusting agent is preferably 1% by mass or less relative to the total amount of the ink composition. Having wettability means that when printing is performed on a base material, the ink composition spreads while being wet without causing cissing. The content of 1% by mass or less is preferable because wet tension of the cured product is high, and therefore cissing hardly occurs when a surface protection layer is formed on the surface of the cured product.

### [Other additives]

The active-energy-ray-curable ink composition may also include, as other additives, various additives, such as a plasticizer, a polymerization inhibitor, a photostabilizer, and an oxidation inhibitor. A solvent can be added to the extent that the object of the invention is achieved, but most preferably, the ink composition includes no solvent.

### [Cured film of active-energy-ray-curable ink composition]

The thickness of the cured film is preferably from 1µm to 100µm inclusive. The thickness of 1µm or more is preferable because the color density of the decorative layer is easily recognized, designability or decorativeness is improved, and properties, such as adhesion and expandability, are improved. The thickness of 100µm or less is preferable because when the ink composition is irradiated with active energy rays, the ink composition can be sufficiently and easily cured in a short time.

Regarding a method for measuring the film thickness of the cured film, an ink composition was coated on a PET film (A4300 manufactured by Toyobo Co., Ltd.) under the same coating conditions as those used for the cured film thus produced, and the thickness of the cured film thus obtained was measured using a micrometer. Measurement was performed at 10 sites for one sample, and the average value of these measured values was designated as an average film thickness. This similarly applies to the surface protection layer and primer described below.

The active-energy-ray-curable ink composition was formed on a rubber base material as a cured film having a thickness of 10µlm. The rubber base material had an elastic modulus of 1.0MPa to 1.5MPa inclusive at 100% elongation when a test piece of JIS No.3 was produced and a tensile test was performed according to JIS K6251. The cured film-formed base material having this cured film formed thereon was used as a dumbbell-shaped test piece No.6 (JIS K6251-5) to perform a tensile test according to the method of JIS K7161 at 25°C and at a tensile rate of 100 mm/min. At this time, the minimum elongation ratio when cracking of the cured film occurred was defined as a cured film fracture point elongation (calculated by (length of printed body when cracking of cured film occurred-original length of printed body)/original length of printed body X 100). The cured film fracture point elongation is preferably 100% or more (for example, the elongation at the time of stretching the base material to a length equal to two times the original length is indicated as 100%), more preferably 150% or more, and still more preferably from 150% to 1000% inclusive. By having a cured film fracture point elongation of 150% or more, the cured film can sufficiently follow the elongation of the base material, and even if the base material is subjected to expansion and contraction, cracking or peeling of the cured film formed on the surface thereof can be further suppressed. On the other hand, a cured film having a cured film fracture point elongation of 1000% or less makes it possible to maintain the strength thereof.

### [Repeated tensile strength of cured film]

The cured film in the laminate body of the present invention has the number of cracks of three or less in a test piece after repeated tensile testing. Here, in the repeated tensile testing, an active-energy-ray-curable ink composition is formed as a cured film having a thickness of 40 µm on an ethylene propylene rubber base material having a thickness of 1.5 mm. The cured film-formed base material having this cured film formed thereon is used as a test piece of width 3 mm X length 80 mm to perform tensile testing at -20 °C and at a tensile rate of 500 mm/min to a length of 130% of the original length. Thereafter, the length is returned to the original length. This is repeated 100 times, and then the number of cracks in all the test pieces is measured visually. Even after the repeated tensile testing is repeated 300 times, the number of cracks is preferably three or less. Details of test results in the present invention will be described in Examples.

A cured film in a conventional laminate body has excellent results in fracture elongation (only expansion) in simple tensile testing, but causes cracks in the above repeated tensile strength testing (described in detail in Examples below). This means that cracking resistance is further required as properties required for the cured film in use conditions in which not only expansion but also expansion and contraction are repeated. In this point, the cured film in the laminate body of the present invention has cracking resistance and external appearance retention having durability even in use conditions in which expansion and contraction are repeated, and has novelty in this point.

### [Use of cured film for something other than decorative layer]

The cured film formed with the active-energy-ray-curable ink composition of the present invention can be used as a decorative layer when including a coloring material or the like, as described above. When the cured film is formed on a decorative layer without adding a coloring material, the cured film in the present invention can be also used as a surface protection layer (overcoat layer) protecting the decorative layer. Furthermore, for example, by forming the cured film between a surface of a base material and a cured film, the cured film can be also used as a primer layer for enhancing adhesion therebetween. An active-energy-ray-curable ink composition for forming such a cured film is also within the scope of the present invention.

As for the active-energy-ray-curable ink composition of the present invention, a decorative layer, a surface protection layer (overcoat layer), or a primer layer can be formed individually with only the cured film formed with the active-energy-ray-curable ink composition of the present invention, or in combination of these layers. For example, a surface protection layer (overcoat layer) can be formed by adding a coloring material or the like to the active-energy-ray-curable ink composition of the present invention to form a decorative layer and ejecting the active-energy-ray-curable ink composition of the present invention including no coloring material or the like on the decorative layer. In addition, the cured film formed with the active-energy-ray-curable ink composition of the present invention can be used in combination with a decorative layer, a surface protection layer (overcoat layer), or a primer layer formed with a conventionally known ink composition. For example, when the active-energy-ray-curable ink composition of the present invention is used as a decorative layer, a surface protection layer (overcoat layer) can be formed on the decorative layer with a conventionally known overcoat composition.

When a surface protection layer (overcoat layer) or a primer layer is formed on a base material, any method may be used to form these layers. Examples thereof include spray coating; coating using a towel, a sponge, nonwoven fabric, tissue paper, or the like; dispenser, brush coating, gravure printing, flexographic printing, silk screen printing, inkjetting, and a thermal transfer method.

### Surface protection layer (overcoat layer)

In a decorative base material, the pleasant or external appearance of a decorative layer is significantly deteriorated by attachment of dust, dirt, mud, soot, pitch, and the like. When the decorative base material is exposed outdoors, cracks and the like may be generated on the surface of the decorative layer, and gloss is impaired particularly due to oxidation or deterioration caused by ultraviolet rays or the like. Therefore, a surface protection layer may be formed on the decorative layer in order to further improve durability of a laminate body. The surface protection layer (overcoat layer) is not necessarily formed on the surface of the decorative layer, but may be formed directly on the surface of the base material, or may be formed on a surface of a primer layer formed on the surface of the base material, described below. The surface protection layer is formed as a cured film by being coated and dried on the cured film of the ink composition.

The surface protection layer (overcoat layer) is not particularly limited. The cured film formed with the active-energy-ray-curable ink composition of the present invention or a cured film formed with a conventionally known (meth)acrylic resin or the like can be used. However, a cured film of a surface protection layer composition including a silicone-modified (meth)acrylic resin having a glass transition point (Tg) of 0°C or less is preferable. The glass transition point (Tg) of the silicone-modified (meth)acrylic resin is preferably -20°C or less. The glass transition point (Tg) of 0°C or less makes elongation of the cured film excellent particularly at a low temperature, and therefore improves followability. Also under conditions in which a stress is applied repeatedly, the cured film has high followability with respect to the base material.

The silicone-modified (meth)acrylate resin means a resin or a resin composition in which a siloxane bond and an acrylic resin coexist. Examples thereof include a copolymer of a silicone modifier (siloxane compound) and an ethylenically unsaturated monomer and an acrylic resin in which a silicone modifier is bonded to a part thereof.

The silicone-modified (meth)acrylate resin is preferably an aqueous emulsion from the viewpoint of reducing VOC, as described below. Examples thereof include a polymer of a (meth)acrylic radical polymerizable monomer and a silicone oligomer. Preferable examples thereof include a polymer obtained by emulsion-polymerizing the (meth)acrylic radical polymerizable monomer and the silicone oligomer using an emulsifier. Specific examples thereof include a silicone-modified acrylic latex described in JP 2010-69645 A and a silicone-modified acrylic emulsion described in JP 2009-290201 A. Commercially available products can be used as these products. Examples thereof include "OP-SA13", "OP-SA79", "OP-SA355", and "OP-SA356" manufactured by DNP Fine Chemicals Co., Ltd. These products may be used singly or in a mixture of two or more kinds thereof.

The silicone-modified (meth)acrylic resin in the surface protection layer composition is preferably a silicone-modified (meth)acrylic emulsion existing as particles in an aqueous acrylic emulsion. The dispersed particle size of the emulsion is preferably 500nm or less, and more preferably 200nm or less. The dispersed particle size of 500nm or less is preferable because adhesion is enhanced.

The amount of a non-volatile component in the emulsion is preferably from 10% to 80% by mass inclusive, and more preferably from 20% to 60% by mass inclusive. The amount of 10% by mass or more is preferable in view of excellent productivity because drying time for forming a protection layer is shorter. The amount of 80% by mass or less is preferable because the surface protection layer composition is coated easily on the base material.

The surface protection layer composition preferably further includes a carbonate-modified urethane resin. The Tg of the carbonate-modified urethane resin is preferably -20°C or less. The carbonate-modified urethane resin does not particularly worsen water resistance and improves damage resistance. In addition, the carbonate-modified urethane resin having a Tg of -20°C or less does not worsen flexibility at a low temperature.

The carbonate-modified urethane resin is at least a polyurethane obtained by reacting polyisocyanate and polyol. Furthermore, the carbonate-modified urethane resin is a polyurethane resin having a polycarbonate-structure, that is, a carbonate group (-O-CO-O-) at least in a part of the molecule.

As a raw material of the polyurethane resin, it is possible to use polyol and polyisocyanate, and components selected from a catalyst, a chain extender, a crosslinking agent, water, a foam stabilizer, and the like, as required. As the polyol, for example, a polycarbonate polyol including a hydroxy group at a molecular terminal is only required to be used at least as a part. Examples of the polycarbonate polyol include polyhexamethylene carbonate diol, polyhexamethylene poly-3-methylpentane carbonate diol, polytetramethylene carbonate diol, poly-1,4-cyclohexanedimethylene carbonate diol, and poly(hexamethylene-1,4-cyclohexanedimethylene carbonate) diol.

The polyisocyanate is not particularly limited, and an aromatic, aliphatic, or alicyclic polyisocyanate can be used. Examples thereof include tolylene diisocyanate, xylylene diisocyanate, diphenylmethane diisocyanate, naphthalene diisocyanate, hexamethylene diisocyanate, and isophorone diisocyanate. A conventionally known catalyst, chain extender, crosslinking agent, foam stabilizer, and the like can be used without any particular limitation.

The carbonate-modified urethane resin may be in a form of being dispersed in water or in a form of emulsion. For example, an aqueous polyurethane resin or an aqueous polyurethane resin composition described in JP 2013-87122 A can be preferably used.

Specific examples of the carbonate-modified urethane resin having a Tg of -20°C or less include a commercially available product, such as "OP-U354" manufactured by DNP Fine Chemicals Co., Ltd. These products may be used singly or in a mixture of two or more kinds thereof.

The content of the carbonate-modified urethane resin is preferably from 5% to 90% by mass inclusive in the surface protection layer composition. The content of 5% by mass or more is preferable due to improving damage resistance. The content of 90% by mass or less is preferable because adhesion to the decorative layer is improved.

The mass ratio of silicone-modified (meth)acrylate resin/carbonate-modified urethane resin is from 95/5 to 1/9 inclusive, preferably 9/1 to 3/7 inclusive, and most preferably 8/2 to 4/6 inclusive. The mass ratio of 1/9 or less is preferable due to further improving damage resistance.

The surface protection layer composition preferably includes a hydrazide. By a dehydration condensation reaction between a carbonyl group included in the silicone-modified (meth)acrylate resin and the decorative layer and a hydrazide group of a hydrazine, crosslinking between emulsion particles and crosslinking between emulsion particles and the decorative layer occur, and adhesion is improved. Therefore, addition of the hydrazide particularly improves adhesion to the base material and the decorative layer.

Examples of the hydrazide include adipic acid dihydrazide, sebacic acid dihydrazide, and dodecanediohydrazide. These hydrazides may be used singly or in a mixture of two or more kinds thereof.

The content of the hydrazide is preferably from 0.1% to 5% by mass inclusive in the ink composition. The content of 0.1% by mass or more is preferable due to enhancing adhesion. The content of 5% by mass or less is preferable because the hydrazide is easily dissolved in the ink.

The thickness of the cured film of the surface protection layer composition is preferably from 1µm to 100 µm inclusive. The thickness of 1µm or more is preferable because the decorative layer can be protected properly. The thickness of 100µm or less is preferable in view of productivity because drying time is short for forming a protection layer.

The active-energy-ray-curable ink composition of the present invention can be also preferably used. By using the active-energy-ray-curable ink composition of the present invention, excellent durability can be realized in an environment in which expansion and contraction are repeated. Furthermore, for example, when a surface protection layer (overcoat layer) is formed on a cured film formed with the active-energy-ray-curable ink composition of the present invention with an overcoat agent formed with the active-energy-ray-curable ink composition of the present invention, the cured film and the surface protection layer (overcoat layer) have similar compositions. Therefore, adhesion therebetween is extremely high. Therefore, it is particularly preferable to use the active-energy-ray-curable ink composition of the present invention as the overcoat agent for the cured film of the active-energy-ray-curable ink composition of the present invention.

When the surface protection layer (overcoat layer) is formed, designability can be imparted to the surface protection layer (overcoat layer) by controlling conditions, such as an ejection amount of an ink composition and the time from ejection of the ink composition to irradiation with active-energy-rays. For example, the surface can be made to have a mat tone or a gloss tone, or an uneven surface protection layer (overcoat layer) having three-dimensional high designability, obtained by making the film thickness nonuniform on purpose, can be formed. An active-energy-ray-curable ink composition for forming such a cured film and a method for forming an uneven image are also within the scope of the present invention. Such a surface protection layer (overcoat layer) is preferably formed by an inkjet method because conditions are easily controlled.

### Primer layer

A primer layer formed with a conventionally known primer agent may be formed, or a primer layer may be formed on a cured film formed with the ink composition of the present invention, in order to enhance adhesion between layers, for example, between the base material layer and the decorative layer, between the base material layer and the overcoat layer, or between the decorative layer and the overcoat layer. For example, in a case when the decorative layer and/or the surface protection layer (overcoat layer) is formed with a cured film using the active-energy-ray-curable ink composition of the present invention, when a primer layer is formed with the active-energy-ray-curable ink composition of the present invention, the cured film and the primer layer have similar compositions. Therefore, adhesion therebetween is extremely high. Therefore, it is particularly preferable to use the active-energy-ray-curable ink composition of the present invention as the primer agent.

Examples of the conventionally known primer agent include the silicone-modified (meth)acrylic emulsion and a resin composition including a chlorinated polyolefin or the like. A primer agent including a silicone-modified (meth)acrylic emulsion having a Tg of 50°C or less is preferable in view of adhesion and followability with respect to the base material, adhesion to the active-energy-ray-curable ink composition, flexibility, and the like. A curing agent may be added to the primer agent in order to enhance adhesion.

The amount of a non-volatile component in the silicone-modified (meth)acrylic emulsion of the primer agent is preferably from 10% to 80% by mass inclusive, and more preferably from 20% to 60% by mass inclusive. The amount of 10% by mass or more is preferable in view of excellent productivity because drying time is shorter for forming the primer layer. The amount of 80% by mass or less is preferable because the primer agent is easily coated.

Examples of the curing agent include polyisocyanate. The content of the curing agent is preferably from 1 to 50 parts by mass inclusive relative to 100 parts by mass of a primer agent. The content of 1 part by mass or more is preferable in view of significantly enhancing adhesion even when the curing agent is added. The content of 50 parts by mass or less is preferable because followability with respect to the base material is improved.

By adding a masking pigment to the primer agent, a masking primer agent can be obtained. By using the masking primer agent, for example, when the base material is colored, the color of the base material can be masked. Therefore, when the decorative layer is formed, designability or color developability can be enhanced. A conventionally known masking pigment can be used as the masking pigment. Examples thereof include a white pigment, such as titanium oxide, an aluminum paste, and a pearl pigment. Particularly, a primer agent containing titanium oxide is preferable in order to enhance designability or color developability of the decorative layer.

When the primer agent includes titanium oxide, the content of titanium oxide is preferably from 1 to 50 parts by mass inclusive relative to 100 parts by mass of the primer agent. The content of 1 part by mass or more significantly enhances designability or color developability after printing. The content of 50 parts by mass or less enhances followability of the cured film or the like.

The thickness of the primer layer is preferably from 1µm to 100µm inclusive. The thickness of 1µm or more is preferable because when a primer layer is provided, adhesion between the surface of the base material and the decorative layer is significantly enhanced, and in the case of a primer layer including a masking pigment, designability or color developability of the decorative layer after printing is significantly enhanced. The thickness of 100µm or less is preferable in view of excellent productivity because drying time for curing the primer agent is short.

Examples of commercially available products of the primer agent include PR-12 and PR-13 (manufactured by DNP Fine Chemicals Co., Ltd.), including titanium oxide and a silicone-modified (meth)acrylic emulsion.

### Method for producing laminate body

In producing the laminate body of the present invention, first, an active-energy-ray-curable ink composition is formed on a base material by a conventionally known method, such as printing, and then the active-energy-ray-curable ink composition is cured by active energy rays to form a decorative layer, a surface protection layer (overcoat layer), or a primer layer (hereinafter, simply referred to as decorative layer or the like).

The decorative layer and the like may be printed by any method, such as an inkjet method, a spray method, or a brush coating method. However, the inkjet method is preferable in view of enhancing a degree of freedom of decorating.

The active energy rays are preferably light having a wavelength region of from 200nm to 450nm inclusive, and more preferably light having a wavelength region of from 250nm to 430nm inclusive. A light source is not particularly limited. Examples thereof include a high pressure mercury lamp, a metal halide lamp, a low pressure mercury lamp, an ultrahigh pressure mercury lamp, an ultraviolet laser, solar light, and an LED lamp. By irradiating the ink composition with active energy rays using these light sources so that the cumulative amount of light is 100mJ/cm² or more, and preferably 200mJ/cm² or more, the ink composition can be instantaneously cured.

A primer layer is formed on a base material in advance, if necessary. In this case, a decorative layer and the like are formed on the primer layer.

Subsequently, a surface protection layer (overcoat layer) may be formed on the decorative layer. When the surface protection layer (overcoat layer) is formed, any method that can uniformly coat the composition may be used. Examples thereof include spray coating, coating using a towel, a sponge, nonwoven fabric, tissue paper, or the like, dispenser, brush coating, gravure printing, flexographic printing, silk screen printing, inkjetting, and a thermal transfer method.

### EXAMPLES

Hereinafter, the present invention will be described in more detail by way of Examples, but the present invention is not limited in any way by these descriptions.

### [Preparation of active-energy-ray-curable ink composition]

Ink compositions of Examples and Comparative Examples were prepared at the ratios (parts by mass) indicated in Table 1. SOLSPERSE 33000 manufactured by Lubrizol Japan, Ltd. was used as a polymer dispersant.

**[Table 1]**

| | Substance name | Modification | Number of functional groups | Number of modifications/Number of functional groups | Tg | Example 1 | Example 2 | Example 3 | Comparative Exampla 1 | Comparative Example 2 | Comparative Example 3 | Comparative Example 4 |
|---|---|---|---|---|---|---|---|---|---|---|---|---|
| Monofunctional monomer | 2-phenoxyethyl acrylate | - | 1 | - | -22 | 40 | 40 | 32 | 30 | 25 | 45 | 40 |
| | Isobornyl acrylate | - | 1 | - | 84 | | | 10 | 15 | 15 | | |
| | Tridecyl acrylate | - | 1 | - | 55 | 20 | 20 | 20 | 20 | 20 | 20 | 20 |
| Bifunctional monomer | Ethoxylated (30) bisphenol A diacrylate | EO×30 | 2 | 15 | 42 | 10 | 10 | 10 | 10 | 10 | 10 | 10 |
| Trifunctional monomer | Ethoxylated (8) trimethylolpropane triacrylte | EO×8 | 3 | 27 | 19 | | | | | 5 | | 5 |
| | Ethoxylated (20) glycerin acrylate | EO×20 | 3 | 67 | Not measurable | 5 | | 3 | | | | |
| Tetrafunctional monomer | Ethoxylated (35) pentaerythritol tetraacrylate | EO×35 | 4 | 88 | Not measurable | | 5 | | | | | |
| Photoinitiator | Diphenyl-2,4,6-trimethylbenzoyl phosphine oxide | | | | | 10 | 10 | 10 | 10 | 10 | 10 | 10 |
| | 1-hydroxy cyclohexylphenyl ketone | | | | | 2 | 2 | 2 | 2 | 2 | 2 | 2 |
| Dispersant | Polymeric ditpersant | | | | | 1 | | 1 | 1 | 1 | 1 | 1 |
| Pigment | Titanium dioxide | | | | | 12 | 12 | 12 | 12 | 1; | 12 | 12 |
| | | | | | | 100 | 100 | 1000 | 100 | 100 | 100 | 100 |

### [Production of laminate body]

In order to perform table evaluation, a printed body was produced using, as a base material, a rubber base material having an elastic modulus of 1.2 MPa at 100% elongation when a test piece of JIS No. 3 was produced and a tensile test was performed according to JIS K6251. A composition to configure the decorative layer indicated in Table1 was printed on the surface of the rubber base material by an inkjet method under the conditions of a resolution of 720dpi so that the average film thickness was 40µm. The ink composition was cured using a SubZero system (UV lamp system, manufactured by Integration Technology, Ltd., D valve, power output: 100W/cm), under the conditions of a cumulative amount of light of 900mJ/cm², a peak illuminance of 640mW/cm², and a rate of conveyance of 18m/min. Measurement of the cumulative amount of light and the peak illuminance was performed using an ultraviolet actinometer, UV-351 (manufactured by Orc Manufacturing Co., Ltd.). The decorative layer was thereby produced.

### [Evaluation of adhesion]

Evaluation of adhesion was performed as follows. That is, a cellophane adhesive tape was attached to the decorative layer after being cured, the decorative layer and the cellophane adhesive tape were caused to adhere to each other sufficiently, and then the cellophane adhesive tape was peeled off at 90°. At this time, adhesion was determined from an extent of adhesion of the decorative layer to the base material. The results are indicated in Table2. In the following evaluation items, a five-grade evaluation of A to E was performed for indicating superiority to inferiority.

### [Evaluation of damage resistance]

Evaluation of damage resistance was performed by evaluating external appearance when a sample was rubbed 100 times in a reciprocating manner with a polybrush. The results are indicated in Table2.

### [Evaluation of weather resistance]

Weather resistance was evaluated by performing a test of a sample body according to JIS K7350-2 and observing the change in external appearance after the sample body was exposed to a xenon arc weatherometer for 100h. The results are indicated in Table2.

### [Evaluation of fracture elongation]

A cured film having a thickness of 10µm was formed on a rubber base material having an elastic modulus of 1.0MPa to 1.5MPa inclusive at 100% elongation when a test piece of JIS No.3 was produced and a tensile test was performed according to JIS K6251. The cured film-formed base material having this cured film formed thereon was used as dumbbell-shaped test piece No.6 (JIS K6251-5) to perform a tensile test according to the method of JIS K7161 at 25°C and at a tensile rate of 100mm/min. At this time, an elongation ratio when cracking of the cured film of the decorative layer occurred was defined as fracture elongation (%) of a cured film. The results are indicated in Table2.

**[Table 2]**

| | Example 1 | Example 2 | Example 3 | Comparative Example 1 | Comparative Example 2 | Comparative Example 3 | Comparative Example 4 |
|---|---|---|---|---|---|---|---|
| Viscosity (40°C,mPa·s) | 13.5 | 14.1 | 12.9 | 12.7 | 13.6 | 11.9 | 13.0 |
| Adhesion | B | B | B | B | B | B | B |
| Damage resistance | B | B | A | A | A | B | B |
| Weather resistance | B | B | B | B | B | B | B |
| Fracture elongation (%) | 200 | 190 | 170 | >300 | 140 | >300 | 170 |

The results in Table2 indicate that the laminate body of the present invention has an evaluation of B or higher in any of adhesion, damage resistance, and weather resistance.

### [Evaluation in repeated tensile testing]

Ink compositions in Examples and Comparative Examples were printed on an ethylene propylene rubber base material having a thickness of 1.5mm (ethylene propylene rubber sheet (500square) manufactured by Sanplatec Co. Ltd., 1.5t, product code WEB 26279, static shearing elastic modulus: 1.04MPa) by an inkjet method under the conditions of a resolution of 720dpi so that the average film thickness after being cured was 40µm. The ink composition was cured using a SubZero system (UV lamp system, manufactured by Integration Technology, Ltd., D valve, power output: 100W/cm), under the conditions of a cumulative amount of light of 900mJ/cm², a peak illuminance of 640mW/cm², and a rate of conveyance of 18 m/min. Measurement of the cumulative amount of light and the peak illuminance was performed using an ultraviolet actinometer, UV-351 (manufactured by Orc Manufacturing Co., Ltd.). The cured film of the decorative layer was thereby produced.

Subsequently, the cured film-formed base material having this cured film formed thereon was used as a test piece of width 3mm X length 80mm to perform tensile testing at -20°C and at a tensile rate of 500mm/min to a length of 130% of the original length. Thereafter, the length was returned to the original length. This was repeated n times, and then the number of cracks in a test piece was measured visually while the test piece was expanded at -20°C and at a tensile rate of 500mm/min to a length of 130% of the original length. A test piece having the number of cracks of zero to three was evaluated as B, a test piece having the number of cracks of four to ten was evaluated as D, and a test piece having the number of cracks of eleven or more was evaluated as E. The results are indicated in Table3. A photograph of a test piece after testing at n=100 is illustrated in FIG.1.

**[Table 3]**

| Repetition number (n) | Example 1 | Example 2 | Example 3 | Comparative Example 1 | Comparative Example 2 | Comparative Example 3 | Comparative Example 4 |
|---|---|---|---|---|---|---|---|
| 10 | B | B | B | B | B | B | B |
| 100 | B | B | B | E | E | E | D |
| 200 | B | B | E | E | E | E | E |
| 300 | D | B | E | E | E | E | E |
| 500 | E | D | E | E | E | E | E |

As indicated in the results in Table3 and FIG.1, the laminate body of the present invention had the number of cracks of three or less even at the repetition number of stretching n of 100. In Example2, the number of cracks was three or less even at n=300.

### INDUSTRIAL APPLICABILITY

The active-energy-ray-curable ink composition of the present invention can be used widely for components of an automobile, components of household electrical appliances, components of electronic devices, cell/battery components, information office equipment components, optical components, household general goods, industrial goods, building materials, flooring materials, packaging materials, and the like. Specifically, the active-energy-ray-curable ink composition can be used for what are referred to as rubber, plastics, hoses, packaging films, packaging materials, tubes, synthetic leather, electronic equipment exterior materials, and the like.

## Claims

1. A laminate body in which a cured film of an active-energy-ray-curable ink composition is formed on a stretchable base material, wherein
the cured film contains cured products of a monomer A) and a monomer B),
the monomer A) is a monofunctional monomer having a glass transition point at or below -30°C,
the monomer B) is an alkylene-oxide-modified tri- or higher-functional monomer in which the number of alkylene oxide modifications/number of functional groups, which is a ratio of the number of alkylene oxide modifications and the number of functional groups, is three or more, and
the number of cracks in a test piece of the cured film after repeated tensile testing is three or less. Repeated tensile testing: An active-energy-ray-curable ink composition is formed as a cured film having a thickness of 40µm on an ethylene propylene rubber base material having a thickness of 1.5mm. The cured film-formed base material having this cured film formed thereon is used as a test piece of width 3mm X length 80mm to perform tensile testing at -20°C and at a tensile rate of 500mm/min to a length of 130% of the original length. Thereafter, the length is returned to the original length. This is repeated 100times, and then the number of cracks in all the test pieces is measured visually.

2. The laminate body according to claim1, wherein the ratio of the number of alkylene oxide modifications/number of functional groups is five or more.

3. The laminate body according to claim1 or 2, wherein the ratio of the number of alkylene oxide modifications/number of functional groups is six or more.

4. The laminate body according to any one of claims1 to 3, comprising 1% to 80% by mass inclusive of the monomer B) relative to a total amount of active-energy-ray-polymerizable monomers.

5. The laminate body according to any one of claims1 to 4, wherein the number of cracks is three or less even when the repetition number of the repeated tensile testing is 300.

6. An active-energy-ray-curable ink composition comprising:
as an active-energy-ray-polymerizable monomer,
a monomer A) which is a monofunctional monomer having a glass transition point at or below -30°C; and
a monomer B) which is an alkylene-oxide-modified tri- or higher-functional monomer in which the number of alkylene oxide modifications/number of functional groups, which is a ratio of the number of alkylene oxide modifications and the number of functional groups, is three or more.

7. The active-energy-ray-curable ink composition according to claim 6, wherein the ratio of the number of alkylene oxide modifications/number of functional groups is five or more.

8. The active-energy-ray-curable ink composition according to claim6 or 7, wherein the ratio of the number of alkylene oxide modifications/number of functional groups is six or more.

9. The active-energy-ray-curable ink composition according to any one of claims6 to 8, comprising 1% to 80% by mass inclusive of the monomer B) relative to a total amount of the active-energy-ray-polymerizable monomers.

10. The active-energy-ray-curable ink composition according to any one of claims6 to 9, wherein the active-energy-ray-curable ink composition is used as an inkjet ink.
